# EUROPÄISCHE PATENTSCHRIFT

(11) **EP 3 375 524 B1**
(45) Veröffentlichungstag und Bekanntmachung des Hinweises auf die Patenterteilung: **17.11.2021**
(21) Anmeldenummer: 18160271.5
(22) Anmeldetag: 06.03.2018
(51) Int. Cl.: B03C 1/28, B03C 1/26, B03C 1/033, B03C 1/02, B63B 29/14, B64D 11/00, E03C 1/04, F21V 33/00

(54) **MAGNETABSCHEIDER ZUR ABSCHEIDUNG FERROMAGNETISCHER PARTIKEL AUS EINEM ABSAUGLUFTSTROM**
MAGNETIC SEPARATOR FOR THE SEPARATION OF FERROMAGNETIC PARTICLES FROM AN EXTRACTED AIR FLOW
SÉPARATEUR MAGNÉTIQUE DESTINÉ À LA SÉPARATION DE PARTICULES FERROMAGNÉTIQUES D'UN ÉCOULEMENT D'AIR ASPIRÉ

(30) Priorität: 13.03.2017 DE 102017105291
(43) Veröffentlichungstag der Anmeldung: 19.09.2018
(73) Patentinhaber: Sehon, Tiemo, 75391 Gechingen (DE); TLA-Technik e. K., 89231 Neu-Ulm (DE)
(72) Erfinder: Sehon, Tiemo, 75391 Gechingen (DE); MARKUS, Philipp, 89231 Neu-Ulm (DE)
(74) Vertreter: DREISS Patentanwälte PartG mbB

(56) Entgegenhaltungen:
- EP-A1- 2 108 454
- DE-A1-102011 006 767
- DE-A1-102013 225 272
- JP-A- 2012 240 019
- US-A- 2 789 655
- US-A- 5 316 151
- US-A1- 2015 107 452

## Beschreibung

Die Erfindung betrifft einen Magnetabscheider zur Abscheidung ferromagnetischer Partikel aus einem Absaugluftstrom, mit einem Gehäuse, zumindest einem in dem Gehäuse angeordneten Magneten, an dem der Absaugluftstrom vorbeigeführt wird, wobei das Gehäuse einen Gehäuseeinlass und einen Gehäuseauslass zur Montage an eine Rohrleitung eines Absaugluftstromes aufweist. Zudem betrifft die Erfindung eine Absaugeinrichtung mit einem solchen Magnetabscheider.

Magnetabscheider zur Abscheidung von Metallpartikeln aus fluiden Medien sind bspw. aus DE 100 06 262 B4 bekannt. Ein solcher Magnetabscheider besteht aus einem senkrechten zylindrischen Gehäuse, einem Zulaufstutzen, einem Ablaufstutzen, einer Schleusenkammer und mehreren Ventile zur Steuerung. In einer Sammelphase werden Metallpartikel gesammelt, bis sich eine definierte Menge an Metallpartikeln abgelagert hat. In einer Sedimentationsphase werden die abgelagerten Metallpartikel in die Schleusenkammer überführt, wobei Zulaufstutzen und Ablaufstutzen verschlossen sind.

Mit diesem Magnetabscheider ist eine Abscheidung von Metallpartikeln möglich. Allerdings ist von Nachteil, dass der Magnetabscheider einen konstruktiv aufwändigen Aufbau aufweist und einen großen Bauraum beansprucht. Zudem ist der Magnetabscheider zur Abscheidung von Metallpartikeln aus einem Absaugluftstrom auf Grund der Vielzahl an Umlenkungen und Ventile und der sich daraus ergebenden Strömungswiderstände nur bedingt geeignet. DE 10 2013 225 272 A1 zeigt eine Reinigungsanlage für Schweißbrenner mit einem Magnetabscheider. US 2015/0107452 A1 offenbart eine Abfallsammelvorrichtung mit elektrisch betriebenen Staubabscheideteilen. JP 2012240019A zeigt einen Magnetabscheider. US 5,316,151 zeigt einen Magnetpulverabscheider. US 2,789,655 zeigt einen Magnetstaubabscheider.

Der Erfindung liegt die Aufgabe zugrunde, mit einfachen konstruktiven Mitteln eine auch bei hohen Strömungsgeschwindigkeiten effektiv arbeitende Abscheidung ferromagnetischer Partikel aus einem Absaugluftstrom zu ermöglichen. Insbesondere soll eine Abscheidung von kleinen ferromagnetischen Partikeln im pm-Bereich, bspw. Metallpartikeln, auch bei hohen Strömungsgeschwindigkeiten im Bereich von 20 bis 50 m/sec. effektiv funktionieren.

Die Erfindung löst die Aufgabe durch einen Magnetabscheider mit den Merkmalen des Anspruchs 1. Danach zeichnet sich der Magnetabscheider dadurch aus, dass im Gehäuseeinlass zumindest ein Leitelement angeordnet ist, welches den Absaugluftstrom in Richtung Magnet lenkt und dass eine Querschnittsfläche des Gehäuseeinlasses kleiner ist als eine Querschnittsfläche im Gehäuse (Gehäuseabschnitt zwischen Gehäuseeinlass und Gehäuseauslass).

Es wurde erkannt, dass bei Geschwindigkeiten von ca. 20 bis 50 m/sec. (Meter/Sekunde) im Bereich von Luftabsauganlagen, ferromagnetische Partikel im Luftstrom mit einer Größe von 0,2 bis 2 µm (Mikrometer) zu einem hohen prozentualen Anteil aus dem Abluftstrom herausgefiltert werden können, wenn zum einen die Luftgeschwindigkeit im Magnetabscheider abgesenkt wird und zum anderen der Luftstrom effektiv auf den bzw. die Magnete gelenkt wird.

Gerade bei Luftabsauganlagen, in denen Volumenströme im Bereich mehrerer hundert m3/h abgesaugt werden und Strömungsgeschwindigkeiten im Bereich von ca. 20 bis 50 m/sec. erreicht werden, können Partikel in einer Größenordnung von wenigen µm mit einem Abscheidegrad von über 90% ausgefiltert bzw. abgeschieden werden.

Bei den abzuscheidenden ferromagnetischen Partikeln kann es sich insbesondere um Metallpartikel handeln. Bspw. kann es sich um Partikel aus Eisen, Cobalt, Nickel oder Legierungen hieraus handeln, die zumindest eine der vorgenannten Komponenten aufweisen.

Weiter erfindungsgemäß sind mindestens zwei Leitelemente im Gehäuseeinlass des Magnetabscheiders angeordnet, die den Absaugluftstrom in mindestens drei Teilströme aufteilen und somit zu einem oder mehreren Magneten lenken. Hierdurch werden eine Aufteilung des Absaugluftstromes und der darin enthaltenen, ggf. auszufilternden Partikeln vorgenommen. Bspw. kann so auf jeden Magneten eine gleichförmige Massen- und/oder Luftstromzuleitung von Partikeln vorgenommen werden.

Im Rahmen einer bevorzugten Ausgestaltung kann im Gehäuse zumindest ein Leitelement angeordnet sein, welches den Absaugluftstrom in Richtung Magnet lenkt.

In vorteilhafter Weise kann ein Verhältnis der Querschnittsfläche des Gehäuseeinlasses kleiner sein als eine Querschnittsfläche im Gehäuse und ein Verhältnis von 1 zu 2 (1:2) aufweisen. Da aufgrund der Kontinuitätsgleichung der Volumenstrom konstant bleibt und A1 · v1 = A2 · v2; wobei: A1 bzw. A2 = Querschnitt an der Stelle 1 bzw. 2 und v1 bzw. v2 = Geschwindigkeit an der Stelle 1 bzw. 2; wird folglich die Geschwindigkeit im Gehäuse des Magnetabscheiders entsprechend dem reziproken Querschnittverhältnis abgesenkt.

Zweckmäßigerweise können der oder die Magnete im Gehäuse in Magnetabdeckungen aus nicht magnetischem Metall demontierbar angeordnet oder positioniert sein. Dabei können die eine oder mehrere Magnetabdeckungen im Gehäuse des Magnetabscheiders befestigt sein, bspw. an einer Gehäuseinnenwand befestigt oder zwischen einer Gehäuseinnenwand und einer Zwischenwand fixiert sein. Die Magnetabdeckungen können bspw. als Hülsen, vorzugsweise als Hülsen aus Titan, ausgebildet sein. Titan, insbesondere verschleißfreies Titan, ist gegenüber abrasiven Partikeln im Abluftstrom resistent. Der oder die Magnete können an einer vom Gehäuse abnehmbaren Gehäuseabdeckung befestigt sein. Damit können der oder die Magnete für eine einfache Reinigung durch Abnehmen der Gehäuseabdeckung von den Magnetabdeckungen abgezogen werden.

Weiter erfindungsgemäß sind mehrere Magnete versetzt zueinander im Gehäuse angeordnet. Die Magnete können bspw. als Permanentmagnete, insbesondere Neodym-Magnete, mit einer Neodym-Eisen-Bor-Legierung (NdxFeyB; wobei beispielsweise x = 2 und y = 14 ist) und mit Feldstärken größer 10.000 Gauß sein. Aber auch einstellbare Elektromagnete können zum Einsatz kommen.

Um die im Gehäuse des Magnetabscheiders reduzierte Luftgeschwindigkeit wieder zu erhöhen, kann zumindest ein Bypasselement am Gehäuseauslass angeordnet sein. Über dieses Bypasselement kann Fremdluft bspw. von außerhalb des Magnetabscheiders ("Falschluft") angesaugt werden, wodurch die Geschwindigkeit des Luftstromes wieder erhöht wird. Daher stellt der Magnetabscheider keine bzw. nur eine minimale Störstelle bzw. Widerstand in der Absaugleitung oder dem Absaugluftstrom dar.

Im Konkreten kann das Bypasselement als Venturidüse ausgebildet sein. Durch den Düsendurchmesser können die Luftgeschwindigkeiten reguliert werden. Außerdem kann am Bypasselement ein Schalldämpfer und/oder einen Vorfilter zur Geräuschreduzierung angebracht sein.

Die eingangs genannte Aufgabe wird auch durch eine Absaugeinrichtung mit den Merkmalen des nebengeordneten Anspruchs gelöst. Hinsichtlich der damit erzielbaren Vorteile wird auf die Ausführungen im Zusammenhang mit Anspruch 1 verwiesen.

Die Absaugeinrichtung kann eine an die Rohrleitung angeschlossene Unterdruckquelle zur Bereitstellung von Unterdruck aufweisen, bspw. einen Ventilator oder eine Absaugturbine. Die Rohrleitung kann sich von der Absaugstelle bis zur Unterdruckquelle erstrecken.

Der Magnetabscheider ist an die Rohrleitung angeschlossen und wird von dem Absaugluftstrom durchströmt. Dem Magnetabscheider kann eine Auffangeinrichtung oder eine Abscheideeinrichtung nachgeschaltet sein, bspw. ein Zyklonabscheider zur Abscheidung nicht ferromagnetischer Partikel. Die Abscheideeinrichtung ist ebenfalls an die Rohrleitung angeschlossen.

In Absaugrichtung (Strömungsrichtung des Absaugluftstroms) kann die Absaugeinrichtung eine Absaugstelle (Absaugöffnung), den Magnetabscheider, eine Abscheideeinrichtung und eine Unterdruckquelle aufweisen. Diese Komponenten können durch Rohrleitungsabschnitte miteinander strömungsverbunden sein. Die Absaugeinrichtung kann Teil eines Karosseriearbeitsplatzes zur Bearbeitung von Fahrzeugkarosserien bilden.

Zur weiteren Ausgestaltung der Absaugeinrichtung können die im Zusammenhang mit dem Magnetabscheider beschriebenen Maßnahmen dienen.

Die Erfindung wird im Folgenden anhand der Figuren näher erläutert, wobei gleiche oder funktional gleiche Elemente teilweise nur einmal mit Bezugszeichen versehen sind. Es zeigen:
Fig.1 ein Ausführungsbeispiel eines Magnetabscheiders in einer Seitenansicht;
Fig.2 den Magnetabscheider aus Fig.1 in einer Schnittansicht (Schnitt durch das Gehäuse des Magnetabscheiders);
Fig.3 den Magnetabscheider aus Fig.1 mit Blickrichtung auf den Gehäuseeinlass; und
Fig.4 den Magnetabscheider aus Fig.1 in einer perspektivischen Explosionsdarstellung.

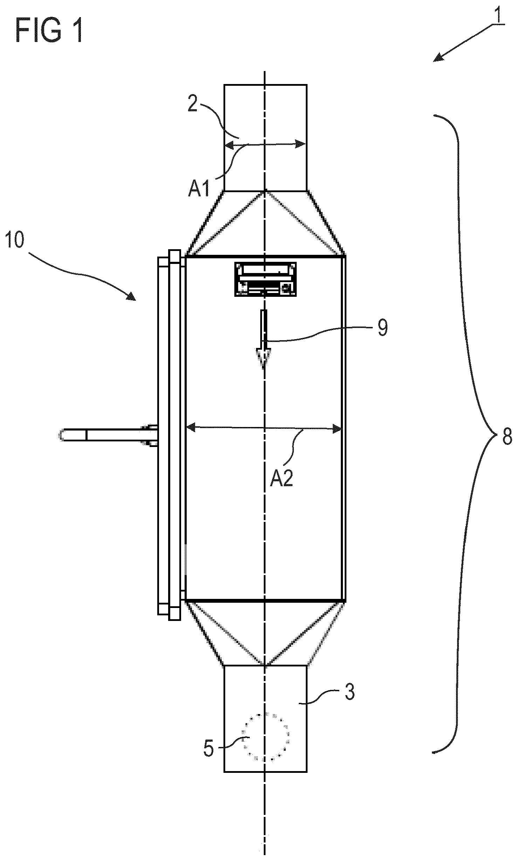

Figur 1 zeigt ein Ausführungsbeispiel eines Magnetabscheiders, der insgesamt mit dem Bezugszeichen 10 bezeichnet ist.

Der Magnetabscheider 1 weist ein Gehäuse 8 auf, welches über einen Gehäuseeinlass 2 und einen Gehäuseauslass 3 verfügt. Über den Gehäuseeinlass 2 und den Gehäuseauslass 3 kann der Magnetabscheider 1 an bzw. in eine Rohrleitung angeschlossen werden. Über die Rohrleitung können zum Beispiel metallische Stäube aus dem Absaugluftstrom ausgefiltert werden. Der Absaugluftstrom wird somit durch das Gehäuse 8 des Magnetabscheiders 1 geführt. Die Strömungsrichtung des Absaugluftstroms ist durch den Pfeil 9 angedeutet.

Die Querschnittsflächen im Einlass A1 und im Auslass sind so gewählt, dass sie an eine bestehende Rohrleitung (Absaugleitungsrohr) passen. Zudem ist die Querschnittsfläche A2 im Inneren des Gehäuses 8 des Magnetabscheiders 1 größer als die Querschnittsfläche A1 im Gehäuseeinlass 2 gewählt.

Vorzugsweise beträgt das Verhältnis dieser Querschnittsflächen A1 : A2 = 1 : 2, so dass die Geschwindigkeit des Absaugluftstroms abgesenkt wird. Hierdurch wird sichergestellt, dass metallische Partikel bei einer Größe von ca. 1 µm an dem mindestens einen Magnet 6 im Inneren des Gehäuses 8 des Magnetabscheiders 1 haften bleiben.

Am Gehäuseauslass 3 ist ein Bypasselement 5 angefügt, das den Luftstrom wieder auf eine höhere Strömungsgeschwindigkeit beschleunigt. Dazu kann bspw. eine Venturidüse vorgesehen sein, die mit einem Schalldämpfer und Vorfilter den Geräuschpegel des Ansauggeräusches entsprechend reduziert.

Links in Figur 1 ist die Gehäuseabdeckung 10 gezeigt, die über Verschraubungen bzw. andere Befestigungsmittel den Innenraum des Magnetabscheiders 1 und die Magnete für Reinigungszwecke zugänglich macht (in Figur 1 nicht gezeigt).

Der Innenraum des Magnetabscheiders 1 ist vom Material her so beschaffen, dass dieser geringe bis gar keine Abrasionen durch die metallischen Partikel in der Luft erfährt. Vorzugsweise ist dieser aus Metall, beispielsweise Titan oder Edelstahl. Der Magnetabscheider 1 mit Gehäuseabdeckung 10 ist so ausgestaltet, dass dieser ATEX zertifiziert ist, d.h. für explosionsgefährdeten Staub- und Gasatmosphären geeignet ist.

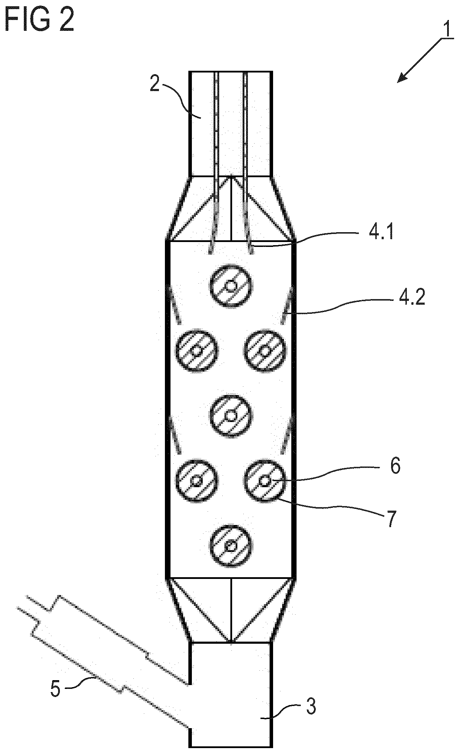

Die Figur 2 zeigt eine Schnittansicht durch das Gehäuse 8 des Magnetabscheiders 1. Im Gehäuseeinlass 2 sind in dieser Ausführung zwei Leitelemente 4.1 angeordnet, die den in den Magnetabscheider 1 einströmenden Luftstrom in drei Teilströme aufteilen.

Die Leitelemente 4.1 bestehen vorzugsweise aus einem abriebfesten Metall und können hinsichtlich des Ablenkwinkels des jeweiligen Teilstromes einstellbar ausgestaltet sein. Außerdem können die Leitelemente 4.1 zu Reinigungszwecken und zum Zwecke des Austausches demontierbar im Magnetabscheider 1 angeordnet sein.

Im Magnetabscheider 1 sind in dieser Ausführung mehrere Magnete 6 angeordnet. Vorliegend sind sieben Magnete 6 vorgesehen, die in fünf Reihen und drei Spalten angeordnet sind. Durch die Stromaufteilung und die Verteilung der Teilströme auf die in Reihen und Spalten angeordneten Magnete 6 wird ein hoher Abscheidegrad der metallischen Partikel im Absaugluftstrom erreicht.

In dieser Ausführung des Magnetabscheiders 1 sind an der Gehäusewand Leitelemente 4.2 angeordnet, die eine Führung der Teilströme zu den Magneten 6 hin bewirken. Die Leitelemente 4.2 können hinsichtlich des Ablenkwinkels des Teilstromes einstellbar ausgeführt sein. Außerdem können die Leitelemente 4.2 zu Reinigungszwecken und zum Zwecke des Austausches demontierbar im Magnetabscheider 1 angeordnet sein.

Die Magnete 6 sind in dieser Ausführung in Magnetabdeckungen 7 untergebracht. Diese sind als Titanhülsen ausgebildet. An der Oberfläche der Titanhülsen scheiden sich die auszufilternden Metallpartikel ab. Beim Reinigen des Magnetabscheiders 1 können die Magnete 6 aus den Magnetabdeckungen 7 entfernt werden und die Oberflächen der Magnetabdeckungen 7 von den Metallpartikeln befreit werden.

Die Querschnittsfläche A1 im Gehäuseeinlass 2 ist kleiner als die Querschnittfläche A2 im Inneren des Magnetabscheiders 1, so dass die Geschwindigkeit des Absaugluftstromes durch die vergrößerte Querschnittfläche abgesenkt wird. Hierdurch wird sichergestellt, dass metallische Partikel durch die Magnetfelder der Magnete 6 an der Oberfläche der Magnetabdeckungen 7 im Inneren des Gehäuses 8 des Magnetabscheiders 1 haften bleiben.

Am unteren Gehäuseauslass 3 ist ein Bypasselement 5 angeordnet, das den Luftstrom wieder auf höhere Strömungsgeschwindigkeit beschleunigt. Dazu kann bspw. eine Venturidüse vorgesehen sein, die mit einem Schalldämpfer und Vorfilter entsprechend den Geräuschpegel des Ansauggeräusches reduziert.

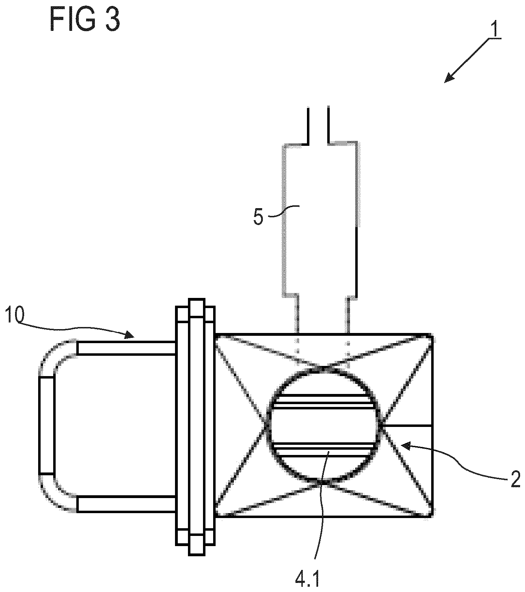

Figur 3 zeigt eine Ansicht aus Richtung Gehäuseeinlass 2 auf den Magnetabscheider 1. Im Gehäuseeinlass 2 sind zwei Leitelemente 4.1 angeordnet, die den in den Magnetabscheider einströmenden Luftstrom in drei Teilströme aufteilen. Die Leitelemente 4.1 haben jeweils ein nach oben und unten in Figur 3 geformtes Profil, um die Teilströme entsprechend zu lenken.

Die Leitelemente 4.1 bestehen vorzugsweise aus einem abriebfesten Metall und können hinsichtlich des Ablenkwinkels des jeweiligen Teilstromes einstellbar ausgestaltet sein. Au-ßerdem können die Leitelemente 4.1 zu Reinigungszwecken und zum Zwecke des Austausches demontierbar im Magnetabscheider 1 angeordnet sein.

Im oberen Teil von Figur 3 ist das Bypasselement 5 zu sehen, welches am Gehäuseauslass 3 angebracht ist. Der Luftstrom wird durch das Bypasselement 5 wieder auf eine höhere Strömungsgeschwindigkeit beschleunigt. Dazu kann bspw. eine Venturidüse die mit einem Schalldämpfer und Vorfilter entspre-chend den Geräuschpegel des Ansauggeräusches reduziert, vorgesehen sein.

Im linken Teil von Figur 3 ist die Gehäuseabdeckung 10 mit Griff gezeigt, die über Verschraubungen bzw. andere Befestigungsmittel den Innenraum des Magnetabscheiders 1 und die in Figur 3 nicht gezeigten Magnete für Reinigungszwecke zugänglich macht.

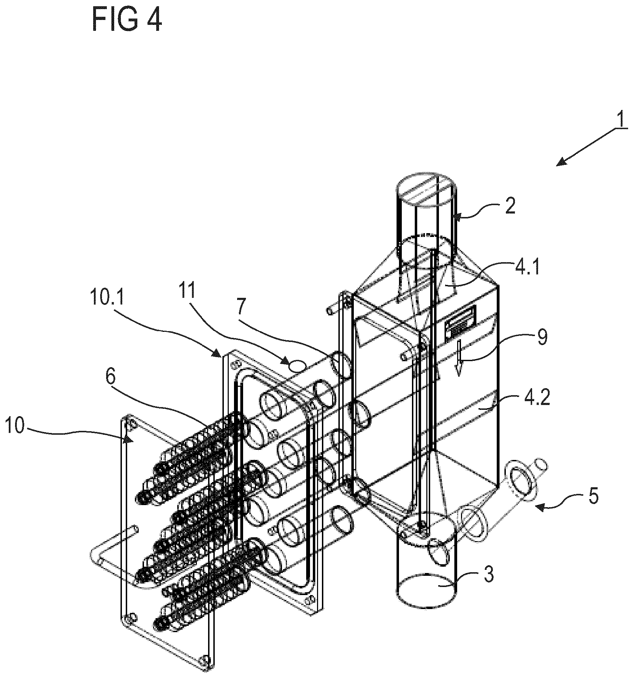

Die Figur 4 zeigt eine perspektivische Ansicht eines Magnetabscheiders 1, bei dem die Gehäuseabdeckung 10 entfernt wurde und die Magneten 6 aus den Magnetabdeckungen 7 herausgezogen wurden. Beispielhaft und in übertriebener Größe wurde in Figur 4 ein Partikel 11 auf der Oberfläche des Magnetabdeckung 7 dargestellt.

Im Gehäuseeinlass 2 sind in dieser Ausführung zwei Leitelemente 4.1 angeordnet, die den in den Magnetabscheider 1 einströmenden Luftstrom in drei Teilströme aufteilen. Die Leitelemente 4.1 bestehen vorzugsweise aus einem abriebfesten Metall und können hinsichtlich des Ablenkwinkels des jeweiligen Teilstromes einstellbar ausgestaltet sein. Außerdem können die Leitelemente 4.1 zu Reinigungszwecken und zum Zwecke des Austausches demontierbar im Magnetabscheider 1 angeordnet sein.

Im Magnetabscheider 1 sind in dieser Ausführung mehrere Magnete 6 angeordnet. Durch die Stromaufteilung und die Verteilung der Teilströme auf die in Reihen und Spalten angeordneten Magnete 6 wird ein hoher Abscheidegrad der metallischen Partikel im Absaugluftstrom erreicht.

In dieser Ausführung des Magnetabscheiders 1 sind an der Gehäusewand 20 ebenfalls Leitelemente 4.2 angeordnet, die eine Führung der Teilströme zu den Magneten 6 hin bewirken. Auch die Leitelemente 4.2 können hinsichtlich des Ablenkwinkels des Teilstromes einstellbar ausgeführt sein.

Außerdem können die Leitelemente 4.2 zu Reinigungszwecken und zum Zwecke des Austausches demontierbar im Magnetabscheider 1 angeordnet sein. Die Magnete 6 sind in dieser Ausführung in Magnetabdeckungen 7 untergebracht. Diese sind bspw. als Titanhülsen ausgebildet.

An der Oberfläche der Titanhülsen scheiden sich die auszufilternden Metallpartikel 11 ab. Beispielsweis können an der Oberfläche der Titanhülsen Vertiefungen eingearbeitet sein, in denen sich die Metallpartikel absetzen. Beim Reinigen des Magnetabscheiders 1 können die Magnete 6 aus den Magnetabdeckungen 7 entfernt werden und die Oberflächen der Magnetabdeckungen 7 von den Metallpartikeln befreit werden. Diese Situation ist in Figur 4 dargestellt.

Während die Magnete 6 links von der Zwischenwand 10.1 entfernt sind, können die an der Oberfläche der Magnetabdeckungen 7 abgeschiedenen Metallpartikel einfach entfernt werden. Die Querschnittsfläche im Gehäuseeinlass 2 ist kleiner als die Querschnittfläche in der Mitte des Magnetabscheiders 1, so dass die Geschwindigkeit des abgesaugten Luftstromes durch den Querschnittflächenzuwachs abgesenkt wird. Hierdurch wird sichergestellt, dass metallische Partikel durch die Magnetfelder der Magnete 6 an der Oberfläche der Magnetabdeckungen 7 im Inneren des Gehäuses 8 des Magnetabscheiders 1 haften bleiben.

Im unteren Gehäuseauslass 3 ist ein Bypasselement 5 eingebaut, das den Luftstrom wieder auf höhere Strömungsgeschwindigkeit beschleunigt. Dazu kann bspw. eine Venturidüse vorgesehen sein, die mit einem Schalldämpfer und Vorfilter entsprechend den Geräuschpegel des Ansauggeräusches reduziert.

## Patentansprüche

1. Magnetabscheider (1) zur Abscheidung ferromagnetischer Partikel aus einem Absaugluftstrom, mit einem Gehäuse (8) zumindest einem in dem Gehäuse (8) angeordneten Magneten (6), an dem im Betrieb der Absaugluftstrom vorbeigeführt wird, wobei das Gehäuse (8) einen Gehäuseeinlass (2) und einen Gehäuseauslass (3) zur Montage an eine Rohrleitung eines Absaugluftstromes aufweist, wobei im Gehäuseeinlass (2) zumindest ein Leitelement (4.1) angeordnet ist, welches im Betrieb den Absaugluftstrom in Richtung Magnet (6) lenkt, wobei eine Querschnittsfläche (A1) des Gehäuseeinlasses (2) kleiner ist als eine Querschnittsfläche (A2) im Gehäuse (8), **dadurch gekennzeichnet, dass** im Gehäuseeinlass (2) zwei Leitelemente (4.1) angeordnet sind, die im Betrieb den Absaugluftstrom in drei Teilströme aufteilen, und dass mehrere Magnete (6) versetzt zueinander, d.h. in mehreren Reihen und Spalten, im Gehäuse (8) angeordnet sind.

2. Magnetabscheider (1) nach Anspruch 1, **dadurch gekennzeichnet, dass** im Gehäuse (8) zumindest ein Leitelement (4.2) angeordnet ist, welches im Betrieb den in drei Teilströme aufgeteilten Absaugluftstrom in Richtung Magnet (6) lenkt.

3. Magnetabscheider (1) nach Anspruch 1 oder 2, **dadurch gekennzeichnet, dass** die Querschnittsfläche (A1) des Gehäuseeinlasses (2) bezogen auf die Querschnittsfläche (A2) im Gehäuse (8) ein Verhältnis von 1 zu 2 aufweist.

4. Magnetabscheider (1) nach einem der voranstehenden Ansprüche, **dadurch gekennzeichnet, dass** der mindestens eine Magnet (6) im Gehäuse (8) in einer Magnetabdeckung (7) aus nicht magnetischem Metall demontierbar angeordnet ist.

5. Magnetabscheider (1) nach einem der voranstehenden Ansprüche, **dadurch gekennzeichnet, dass** zumindest ein Bypasselement (5) am Gehäuseauslass (3) angeordnet ist.

6. Magnetabscheider (1) nach Anspruch 5, **dadurch gekennzeichnet, dass** das Bypasselement (5) als Venturidüse ausgebildet ist und einen Schalldämpfer und/oder einen Vorfilter zur Geräuschreduzierung aufweist.

7. Absaugeinrichtung zur Absaugung von Partikeln an einer Absaugstelle mit einem Absaugluftstrom, mit einer Rohrleitung, in der der Absaugluftstrom geführt ist und mit einem an die Rohrleitung angeschlossenen Magnetabscheider (1) zur Abscheidung ferromagnetischer Partikel aus dem Absaugluftstrom nach einem der voranstehenden Ansprüche.

## Claims

1. Magnetic separator (1) for separating ferromagnetic particles from an exhaust airstream, comprising a housing (8), at least one magnet (6) which is arranged inside the housing (8) and past which the exhaust airstream is guided in operation, wherein the housing (8) comprises a housing inlet (2) and a housing outlet (3) for mounting in a tubing of an exhaust airstream, wherein in the housing inlet (2) at least one guiding element (4.1) is arranged, which directs the exhaust airstream toward the magnet (6) in operation, wherein a cross-sectional area (A1) of the housing inlet (2) is smaller than a cross-sectional area (A2) inside the housing (8),
**characterized in that** two guiding elements (4.1) are arranged in the housing inlet (2) which in operation divide the exhaust airstream into three partial streams,
and that a plurality of magnets (6) are arranged inside the housing (8) offset against each other, i.e. in several rows and columns.

2. Magnetic separator (1) as claimed in claim 1, **characterized in that** at least one guiding element (4.2) is arranged in the housing (8) which in operation directs the exhaust airstream separated into three partial streams towards the magnet (6).

3. Magnetic separator (1) as claimed in claim 1 or 2, **characterized in that** the cross-sectional area (A1) of the housing inlet (2) has a relation of 1 to 2 with respect to the cross-sectional area (A2) inside the housing (8).

4. Magnetic separator (1) as claimed in one of the preceding claims, **characterized in that** the at least one magnet (6) is detachably mounted in the housing in a magnet cover (7) made of a non-magnetic metal.

5. Magnetic separator (1) as claimed in one of the preceding claims, **characterized in that** at least one bypass element (5) is arranged at the housing outlet (3).

6. Magnetic separator (1) as claimed in claim 5, **characterized in that** the bypass element (5) is configured as a Venturi nozzle and comprises a silencer and/or a pre-filter for noise reduction.

7. Exhaust device for exhausting particles at an exhaust location with an exhaust airstream, comprising a duct guiding the exhaust airstream and a magnetic separator (1) for separating ferromagnetic particles from the exhaust airstream as claimed in one of the preceding claims connected to the duct.

## Revendications

1. Séparateur magnétique (1) pour la séparation de particules ferromagnétiques d'un courant d'air d'aspiration, avec un boîtier (8), au moins un aimant (6) disposé dans le boîtier (8), devant lequel lors du fonctionnement le courant d'air d'aspiration est amené à passer, dans lequel le boîtier (8) présente une entrée de boîtier (2) et une sortie de boîtier (3) pour le montage sur une conduite d'un courant d'air d'aspiration, dans lequel au moins un élément d'acheminement (4.1), lequel lors du fonctionnement dirige le courant d'air d'aspiration en direction de l'aimant (6), est disposé dans l'entrée de boîtier (2), dans lequel une surface de section transversale (A1) de l'entrée de boîtier (2) est plus petite qu'une surface de section transversale (A2) dans le boîtier (8), **caractérisé en ce que** deux éléments d'acheminement (4.1), qui lors du fonctionnement divisent le courant d'air d'aspiration en trois courants partiels, sont disposés dans l'entrée de boîtier (2), et que plusieurs aimants (6) sont disposés dans le boîtier (8) de manière décalée les uns des autres, c'est-à-dire en plusieurs rangées et colonnes.

2. Séparateur magnétique (1) selon la revendication 1, **caractérisé en ce qu'**au moins un élément d'acheminement (4.2), lequel lors du fonctionnement dirige le courant d'air d'aspiration divisé en trois courants partiels en direction de l'aimant (6), est disposé dans le boîtier (8).

3. Séparateur magnétique (1) selon la revendication 1 ou 2, **caractérisé en ce que** la surface de section transversale (A1) de l'entrée de boîtier (2) présente par rapport à la surface de section transversale (A2) dans le boîtier (8) un rapport de 1 à 2.

4. Séparateur magnétique (1) selon l'une quelconque des revendications précédentes, **caractérisé en ce que** le au moins un aimant (6) est disposé de manière démontable dans le boîtier (8) dans un couvercle magnétique (7) composé de métal non magnétique.

5. Séparateur magnétique (1) selon l'une quelconque des revendications précédentes, **caractérisé en ce qu'**au moins un élément de dérivation (5) est disposé sur la sortie de boîtier (3) .

6. Séparateur magnétique (1) selon la revendication 5, **caractérisé en ce que** l'élément de dérivation (5) est réalisé sous la forme d'un tube de Venturi et présente un silencieux et/ou un préfiltre pour la réduction des bruits.

7. Dispositif d'aspiration pour l'aspiration de particules sur un point d'aspiration avec un courant d'air d'aspiration, avec une conduite, dans laquelle le courant d'air d'aspiration est guidé et avec un séparateur magnétique (1) raccordé à la conduite pour la séparation de particules ferromagnétiques du courant d'air d'aspiration selon l'une quelconque des revendications précédentes.
